# EUROPÄISCHE PATENTANMELDUNG

(11) **EP 1 147 935 A2**
(43) Veröffentlichungstag der Anmeldung: **24.10.2001**
(21) Anmeldenummer: 01104684.4
(22) Anmeldetag: 24.02.2001
(51) Int. Cl.: B60K 15/04, B60K 15/06, B60K 15/077

(54) **Verschlussvorrichtung für einen Kraftstoffbehälter**

(30) Priorität: 18.04.2000 DE 10019375
(71) Anmelder: Mannesmann VDO Aktiengesellschaft, 60388 Frankfurt am Main (DE)
(72) Erfinder: Krogull, Christian, 45899 Gelsenkirchen (DE); Reiter, Frank, 65812 Bad Soden (DE)
(74) Vertreter: Barz, Torsten (DE)

(57) **Zusammenfassung**

Gegenstand der Erfindung ist eine Verschlussvorrichtung für einen Kraftstoffbehälter, insbesondere für einen Kraftstoffbehälter in einem Kraftfahrzeug. Die Verschlußvorrichtung weist einen Füllstandsgeber (6) und einen Sperrkörper (5) auf, die beide zusammen eine Baueinheit bilden, wobei der Sperrkörper derart verstellbar ist, daß er in einer Lage eine Öffnung in dem Behälter verschließt.

## Beschreibung

Gegenstand der Erfindung ist eine Verschlussvorrichtung mit einem Sperrkörper für einen Kraftstoffbehälter, insbesondere für einen Kraftstoffbehälter in einem Kraftfahrzeug.

Derartige Behälter besitzen einen Einfüllstutzen, über den der Behälter befüllbar ist. Beim Betanken des Behälters verdrängt der einströmende Kraftstoff das im Behälter befindliche Gas. Zur Vermeidung eines unkontrolliertem Abströmens des verdrängten Gases besitzen heutige Behälter Entlüftungssysteme, mit dem das Gas sowohl während des Betankens als auch während des Betriebs definiert abgeleitet wird. Für ein sicheres Funktionieren des Entlüftungssystems ist es notwendig, dass insbesondere beim Betanken des Behälters kein Kraftstoff in das Entlüftungssystem gelangt.

Es ist es allgemein bekannt, das Einfüllrohr unterhalb der oberen Begrenzungswand des Kraftstoffbehälters in diesen einmünden zu lassen, während das Entlüftungssystem oberhalb dieser Einmündung angeordnet ist. Auf diese Weise verbleibt im Behälter oberhalb des Flüssigkeitspegels ein Gasraum, der bewirkt, dass durch den im Einfüllrohr aufbauenden Druck die Befülleinrichtung abgeschaltet wird. Dadurch wird verhindert, dass das Entlüftungssystem durch ein Überfüllen des Behälters mit Kraftstoff gefüllt wird.

Dazu ist eine Vorrichtung bekannt, bei der sowohl im Entlüftungssystem als auch im Einfüllrohr Steuerventile angeordnet sind (DE 197 38 198 A1). Über mehrere Sensoren, die an unterschiedlichen Stellen im Behälter sowie dem Einfüllrohr angeordnet sind, werden bestimmte Prozessparameter, z. B. Druck und Durchflussmenge erfasst. Die von diesen Sensoren generierten Signale werden einem Steuerbaustein zugeleitet, der daraufhin mittels entsprechender Steuersignale die Steuerventile beaufschlagt. Nachteilig an dieser Vorrichtung ist die aufwendige Montage dieses Systems aufgrund der Vielzahl von Signalund Steuerleitungen. Diese bedingen neben dem erhöhten Aufwand für die Verlegung der Leitungen zusätzliche Abdichtmaßnahmen gegenüber dem Behälter.

Der Erfindung liegt daher die Aufgabe zugrunde, eine Verschlussvorrichtung für einen Kraftstoffbehälter zu schaffen, die ein sicheres Abschalten der Befülleinrichtung ermöglicht und darüber hinaus einfach und robust aufgebaut sowie leicht zu montieren ist.

Gelöst wird die Aufgabe mit den Merkmalen des Anspruchs 1. Vorteilhafte Ausgestaltungen sind in den Unteransprüchen beschrieben.

Die Verschlussvorrichtung besteht aus einem Füllstandsgeber, der mit einem Sperrkörper eine Baueinheit bildet, wobei der Sperrkörper bewegbar ausgebildet ist und in einer Ausrichtung eine Öffnung verschließt. Dies ermöglicht eine relativ kompakte Ausführung der erfindungsgemäßen Verschlussvorrichtung. Die Verschlussvorrichtung benötigt wenig Bauteile und somit einen geringen Platzbedarf. Aufwendig zu verlegende und gegenüber dem Behälter abzudichtende Leitungen entfallen.

So kann beispielsweise über einen gemeinsamen Träger sowohl der Füllstandsgeber als auch der Sperrkörper aufgenommen und an der zu verschließenden Öffnung angeordnet werden. Durch entsprechende Ausgestaltung des Trägers ist dieser an die verschiedensten Öffnungen anpassbar und somit universell einsetzbar. Ein weiterer Vorteil besteht darin, daß die Verschlußvorrichtung als Baueinheit bereits außerhalb des Behälters zusammengebaut und auf ihre Funktion geprüft werden kann. Die Montage der Baueinheit im Behälter ist damit wesentlich vereinfacht.

Als Füllstandsgeber sind alle bekannten Füllstandsgeber verwendbar.

In einer weiteren vorteilhaften Ausgestaltung wird der Sperrkörper mechanisch bestätigt. Die Verschlußvorrichtung gestaltet sich dabei besonders einfach und robust, wenn als Füllstandsgeber Hebelgeber oder Tauchrohrgeber verwendet werden. Hierbei dient der Schwimmer oder der Hebelarm als Betätigungselement für den Sperrkörper. Ein zwischen dem Betätigungselement und dem Sperrkörper angeordnetes Getriebe, Kurven- oder Hebelmechanismus erleichtert die Betätigung des Sperrkörpers. Der Sperrkörper kann eine Klappe, ein Konus oder ein Schieber sein, der schwenk- oder drehbar angeordnet ist. Das Getriebe und der Hebelmechanismus können dabei so ausgelegt sein, dass sie den Sperrkörper erst ab einem bestimmten Füllstand in seine Schließposition bewegen. Bei der Verwendung eines Zahnradgetriebes wird dies durch die Verwendung eines Zahradsegments anstelle eines kompletten Zahnrades ermöglicht.

Eine besonders einfache Ausgestaltung der erfindungsgemäßen Vorrichtung ergibt sich bei der Verwendung eines Hebelgebers. Hierbei ist die Drehachse des Hebelarms über die Lagerstelle im Hebelgebergehäuse hinaus verlängert, so daß sich der Sperrkörper an ihr befestigen läßt. Die Verschlußvorrichtung benötigt auf diese Weise besonders wenig Bauteile und kann daher sehr klein ausgeführt werden.

In einer anderen Ausgestaltung der Erfindung wird der Sperrkörper elektrisch betätigt, indem das vom Füllstandsgeber erzeugte Signal zum Betätigen des Sperrkörpers genutzt wird. Der Vorteil bei dieser Ausgestaltung besteht ebenfalls darin, dass aufgrund der unmittelbaren Anordnung des Sperrkörpers am Füllstandsgeber keine separat zu montierenden Steuer- und Signalleitungen notwendig sind. In dieser Ausgestaltung sind alle den Füllstand in Form eines elektrischen Signals anzeigenden Füllstandgeber verwendbar. Hierbei können als Sperrkörper auch 2-Wegeventile Verwendung finden.

An drei Ausführungsbeispielen wird die Erfindung näher erläutert. Dabei zeigen
- Fig. 1:: eine perspektivische Darstellung der Verschlußvorrichtung und
- Fig. 2, 3:: einen Schnitt durch einen Behälter mit der Verschlußvorrichtung.

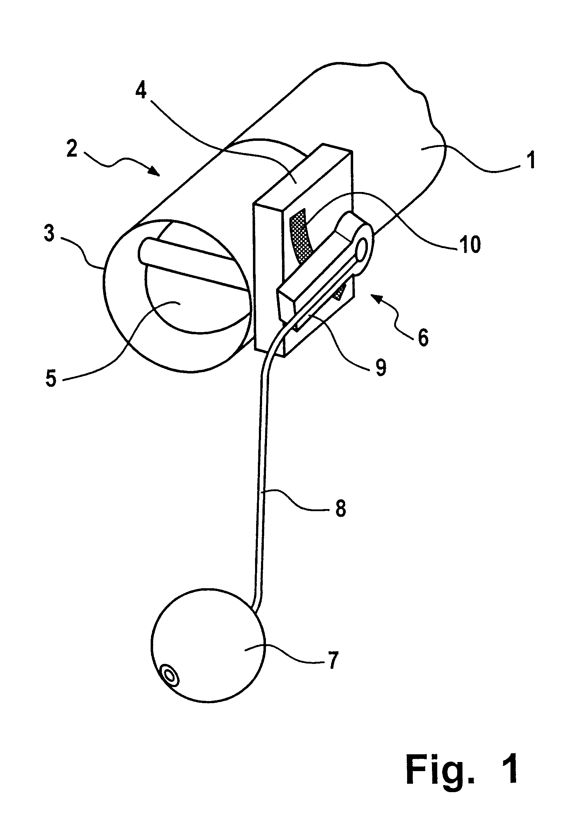

An dem in Fig. 1 dargestellten Rohr 1 ist ein Träger 2 aufgesteckt. Dieser umfaßt einen rohrförmigen Abschnitt 3 und ein Gehäuse 4. In dem rohrförmigen Abschnitt 3 ist eine drehbare Klappe 5 angeordnet, die in horizontaler Ausrichtung den Abschnitt 3 freigibt und in vertikaler Ausrichtung verschließt. Das Gehäuse 4 trägt einen Füllstandsgeber 6. Dieser besitzt einen Schwimmer 7, der an einem Hebelarm 8 angeordnet ist. Der Hebelarm 8 ist im Gehäuse 4 drehbar gelagert. Mittels eines Schleifkontaktes 9, der auf einem Widerstandsnetzwerk 10 gleitet, wird ein elektrisches Signal als Maß für den Füllstand gewonnen. Im Gehäuse 4 ist ein Getriebe oder Mechanismus angeordnet, der den Hebelarm 8 in seiner Lagerstelle mit der drehbaren Klappe 5 verbindet.

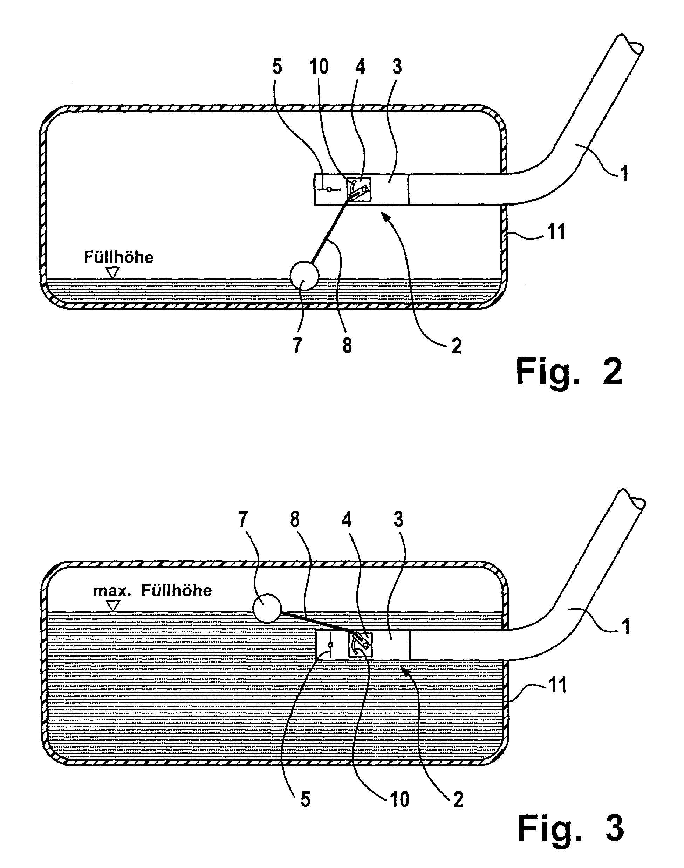

Der in Fig. 2 dargestellte Behälter 11 weist einen geringen Flüssigkeitspegel auf. Aufgrund dessen zeigt der Hebelarm 8 nach unten und die Klappe 5 ist über den Mechanismus im Gehäuse 4 in eine horizontale Ausrichtung bewegt worden. Der entgegengesetzte Fall ist in Fig. 3 dargestellt. Der Behälter 11 ist bis auf maximale Höhe gefüllt. Über den Schwimmer 7 ist der Hebelarm 8 nach oben verschwenkt worden. Das hat zur Folge, daß die über den Mechanismus mit dem Hebelarm 8 verbundene Klappe 5 in einen vertikale Ausrichtung bewegt wurde, so daß sie das Rohr 1 verschließt.

## Patentansprüche

1. Verschlussvorrichtung für einen Behälter, vorzugsweise einen Kraftstoffbehälter eines Kraftfahrzeugs, mit mindestens einer zu verschließenden Öffnung, bestehend aus einem Füllstandsgeber und einem Sperrkörper, **dadurch gekennzeichnet, dass** der Füllstandsgeber (6) und der Sperrkörper (2) eine Baueinheit (2) bilden, daß der Sperrkörper (5) derart verstellbar ist, daß er in einer Ausrichtung eine Öffnung verschließt.

2. Verschlussvorrichtung nach Anspruch 1, **dadurch gekennzeichnet, dass** der Füllstandsgeber (6) ein einen Hebelarm (8) aufweisender Hebelgeber oder ein Tauchrohrgeber ist.

3. Verschlussvorrichtung nach Anspruch 1 oder 2, **dadurch gekennzeichnet, dass** der Sperrkörper (5) eine Klappe, ein Konus oder ein Schieber ist.

4. Verschlussvorrichtung nach zumindestens einem der Ansprüche 1 bis 3, **dadurch gekennzeichnet, dass** der Sperrkörper (5) mechanisch, vorzugsweise mittels eines Zahnradgetriebes, eines Kurven- oder Hebelmechanismuses, betätigbar ist.

5. Verschlussvorrichtung nach zumindestens einem der Ansprüche 1 bis 4, **dadurch gekennzeichnet, dass** der Sperrkörper (5) drehbar oder schwenkbar an einer Achse befestigt ist.

6. Verschlussvorrichtung nach Anspruch 5, **dadurch gekennzeichnet, dass** die Achse die Drehachse des Hebelarms (8) eines Füllstandsgebers (6) ist.

7. Verschlussvorrichtung nach zumindestens einem der Ansprüche 1 bis 6, **dadurch gekennzeichnet, dass** der Hebelarm (8) oder der Schwimmer (7) des Füllstandsgebers (6) Bestandteile des den Sperrkörper (5) antreibenden Mechanismuses sind.

8. Verschlussvorrichtung nach Anspruch 1, **dadurch gekennzeichnet, dass** der Sperrkörper (5) elektrisch betätigbar ist.

9. Verschlussvorrichtung nach Anspruch 8, **dadurch gekennzeichnet, dass** der Sperrkörper ein 2-Wegeventil ist.

10. Verschlussvorrichtung nach mindestens einem der vorangehenden Ansprüche 1 bis 9, **dadurch gekennzeichnet, dass** die Baueinheit (2) einen den Füllstandsgeber (6) und den Sperrkörper (5) aufnehmenden Träger (3) besitzt.

11. Verwendung der Verschlussvorrichtung nach Anspruch 1, **dadurch gekennzeichnet, dass** die Verschlussvorrichtung (2) an einem im Behälter (11) liegenden Ende eines Einfüllrohrers (1) oder am Entlüftungssystems des Behälters (11) angeordnet ist.
